(19) Europäisches Patentamt / European Patent Office / Office européen des brevets

(11) **EP 4 625 309 A1**

(12) **EUROPEAN PATENT APPLICATION**

(43) Date of publication:
01.10.2025 Bulletin 2025/40

(21) Application number: 25159386.9

(22) Date of filing: 21.02.2025

(51) International Patent Classification (IPC):
*G06T 5/92* (2024.01)     *G06T 5/40* (2006.01)

(52) Cooperative Patent Classification (CPC):
**G06V 10/60; G06T 5/40; G06T 5/92;**
G06T 2207/10016; G06T 2207/20208

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 25.03.2024 US 202418615667

(71) Applicant: **INTEL Corporation**
**Santa Clara, CA 95054 (US)**

(72) Inventor: **Grilikhes, Dmitry**
**7630604 Rehovot (IL)**

(74) Representative: **Samson & Partner Patentanwälte
mbB
Widenmayerstraße 6
80538 München (DE)**

(54) **GLOBAL TONE MAPPING FOR HDR IMAGES WITH HISTORGRAM GAP**

(57) Techniques for improving image quality of a HDR image by increasing the contrast in the dark portion of the image while preserving the bright parts of the image. The methods preserve the input dynamic range. An image with a luminance histogram gap between a main portion with low brightness and a small portion with high brightness. A first tone mapping curve is determined for the low brightness portion of the image. A second tone mapping curve is determined from a selected point on the first tone mapping curve to a maximum brightness level of the input image. A final tone mapping curve is generated including the first tone mapping curve from a minimum brightness input to the selected point and the second tone mapping curve from the selected point to a maximum brightness level. The method can increase overall image quality and contrast.

100

FIG. 1

EP 4 625 309 A1

**Description**

<u>Technical Field</u>

This disclosure relates generally to image processing, and in particular to tone mapping for images with a histogram gap.

<u>Background</u>

Most modern cameras produce high dynamic range (HDR) images. HDR images typically undergo a tone mapping transformation in an attempt to improve the recognizability of objects in the image scene. However, in many instances, HDR images can have one or more areas of very bright pixels with the rest of the image being quite dark. When a tone mapping transformation is performed on a dark image having a bright area, there is little improvement in image quality or the appearance of objects in the image scene.

<u>Brief Description of the Drawings</u>

Embodiments will be readily understood by the following detailed description in conjunction with the accompanying drawings. To facilitate this description, like reference numerals designate like structural elements. Embodiments are illustrated by way of example, and not by way of limitation, in the figures of the accompanying drawings.

FIG. 1 illustrates an example overview of an image processing framework that can be used for calibration and/or training, in accordance with various embodiments.
FIG. 2 illustrates an example of image processing, in accordance with various embodiments.
FIGS. 3A-3E are examples diagrams illustrating a brightness histogram and a tone mapping curve, in accordance with various embodiments.
FIG. 4 illustrates a flow chart of a method for tone mapping, in accordance with various embodiments.
FIG. 5 illustrates a high level flow chart of a method for tone mapping, in accordance with various embodiments.
FIG. 6 illustrates a DNN system, in accordance with various embodiments.
FIG. 7 is a block diagram of an example computing device, in accordance with various embodiments.

<u>Detailed Description</u>

<u>*Overview*</u>

HDR images typically undergo a tone mapping transformation in an attempt to improve the recognizability and image quality of objects in the image scene. However, in many instances, HDR images can have one or more small areas of very bright pixels with the rest of the image being quite dark. This happens quite frequently, for example in a scene with a bright sky, a scene with a bright lamp, or a scene with a sunny window. In such images, the interesting portions of the image are generally in the dark portion of the image, while the bright portion of the image is less important. From a consumer perspective, the objective for such an image is to improve the quality of the interesting portions of the image (the dark portion) as much as possible while also not over-exposing (or eliminating) the bright portion of the image. However, when a general tone mapping transformation is performed on a dark image having a bright area, there is little improvement in image quality or the appearance of objects in the image scene.

When image pixel brightness is plotted in a histogram, dark images having one or more bright areas can have a large gap in the histogram between the small number of very bright pixels and the large number of dark pixels (representing the rest of the image). Using the pixel brightness histogram, the dark and bright portions of the image can be identified. Techniques are provided herein to improve image quality by increasing the contrast in the dark portion of the image while preserving the bright parts and saving the input dynamic range. In particular, an image that has a luminance histogram gap between a main portion with low brightness and a small portion with high brightness is identified. A first tone mapping curve is determined for the low brightness portion of the image. A second tone mapping curve is determined from a selected point on the first tone mapping curve to a maximum brightness level of the input image. A final tone mapping curve is generated including the first tone mapping curve from a minimum brightness input to the selected point and the second tone mapping curve from the selected point to a maximum brightness level. In some examples, the method can increase image quality and contrast on intentionally captured faces, since faces usually belong to the main portion of the image.

For purposes of explanation, specific numbers, materials, and configurations are set forth in order to provide a thorough understanding of the illustrative implementations. However, it will be apparent to one skilled in the art that the present disclosure may be practiced without the specific details or/and that the present disclosure may be practiced with only some of the described aspects. In other instances, well known features are omitted or simplified in order not to obscure the illustrative implementations.

Further, references are made to the accompanying drawings that form a part hereof, and in which is shown, by way of illustration, embodiments that may be practiced. It is to be understood that other embodiments may be utilized, and structural or logical changes may be made without departing from the scope of the present disclosure. Therefore, the following detailed description is not to be taken in a limiting sense.

Various operations may be described as multiple discrete actions or operations in turn, in a manner that is most helpful in understanding the claimed subject matter. However, the order of description should not be construed as to imply that these operations are necessarily order dependent. In particular, these operations may not be performed in the order of presentation. Operations described may be performed in a different order from the described embodiment. Various additional operations may be performed or described operations may be omitted in additional embodiments.

For the purposes of the present disclosure, the phrase "A and/or B" or the phrase "A or B" means (A), (B), or (A and B). For the purposes of the present disclosure, the phrase "A, B, and/or C" or the phrase "A, B, or C" means (A), (B), (C), (A and B), (A and C), (B and C), or (A, B, and C). The term "between," when used with reference to measurement ranges, is inclusive of the ends of the measurement ranges.

The description uses the phrases "in an embodiment" or "in embodiments," which may each refer to one or more of the same or different embodiments. The terms "comprising," "including," "having," and the like, as used with respect to embodiments of the present disclosure, are synonymous. The disclosure may use perspective-based descriptions such as "above," "below," "top," "bottom," and "side" to explain various features of the drawings, but these terms are simply for ease of discussion, and do not imply a desired or required orientation. The accompanying drawings are not necessarily drawn to scale. Unless otherwise specified, the use of the ordinal adjectives "first," "second," and "third," etc., to describe a common object, merely indicates that different instances of like objects are being referred to and are not intended to imply that the objects so described must be in a given sequence, either temporally, spatially, in ranking or in any other manner.

In the following detailed description, various aspects of the illustrative implementations will be described using terms commonly employed by those skilled in the art to convey the substance of their work to others skilled in the art.

The terms "substantially," "close," "approximately," "near," and "about," generally refer to being within +/- 20% of a target value based on the input operand of a particular value as described herein or as known in the art. Similarly, terms indicating orientation of various elements, e.g., "coplanar," "perpendicular," "orthogonal," "parallel," or any other angle between the elements, generally refer to being within +/- 5-20% of a target value based on the input operand of a particular value as described herein or as known in the art.

In addition, the terms "comprise," "comprising," "include," "including," "have," "having" or any other variation thereof, are intended to cover a non-exclusive inclusion. For example, a method, process, device, or system that comprises a list of elements is not necessarily limited to only those elements but may include other elements not expressly listed or inherent to such method, process, device, or systems. Also, the term "or" refers to an inclusive "or" and not to an exclusive "or."

The systems, methods, and devices of this disclosure each have several innovative aspects, no single one of which is solely responsible for all desirable attributes disclosed herein. Details of one or more implementations of the subject matter described in this specification are set forth in the description below and the accompanying drawings.

*Example Tone Mapping Framework*

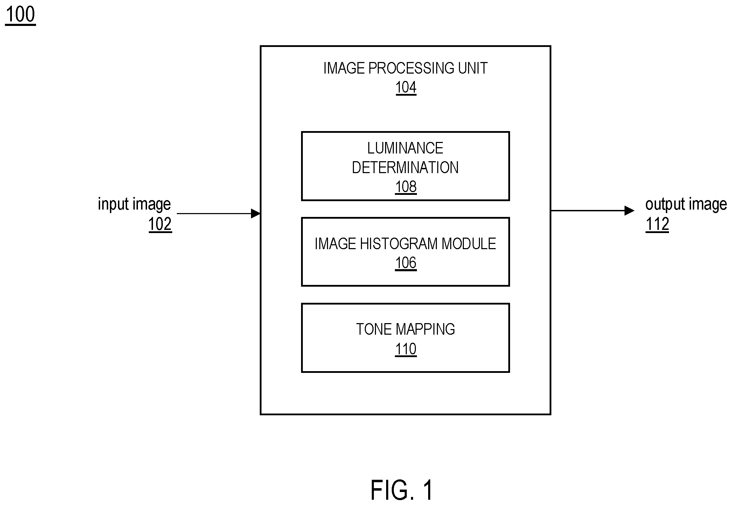

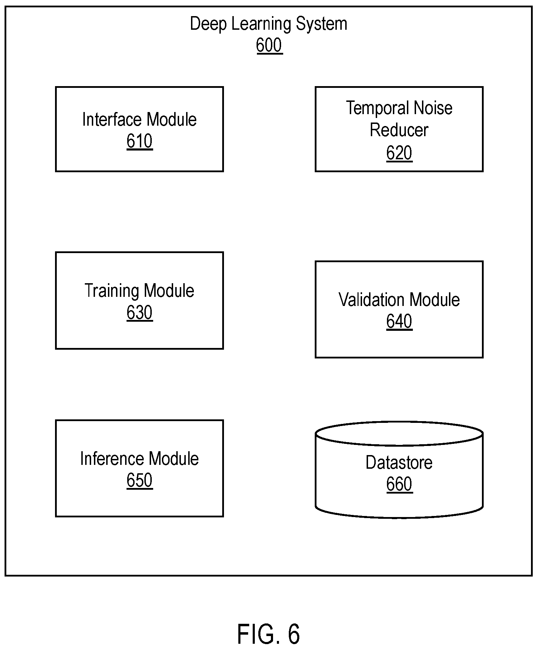

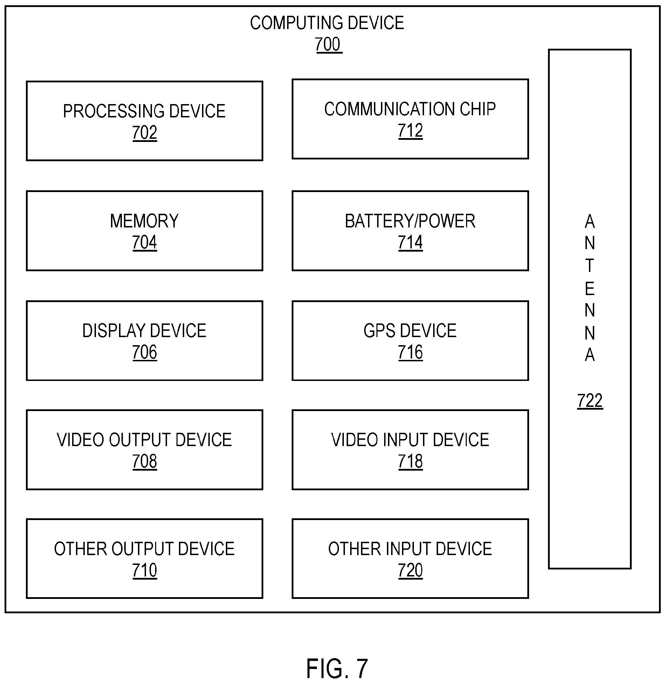

FIG. 1 illustrates an example overview of a tone mapping framework 100 that can be used for processing images with a high dynamic range, in accordance with various embodiments. In some examples, the tone mapping framework 100 can be used to process any image, and the determination that an image has a high dynamic range can be determined at the image processing unit 104. When the image processing unit 104 determines that an image has a high dynamic range, the image can be processed with global tone mapping as described herein. In some examples, the tone mapping framework 100 is a part of a neural network 600 as described with respect to FIG. 6. In some examples, the tone mapping framework 100 is a part of a computing device 700 as described with respect to FIG. 7.

As shown in FIG. 1, an image processing unit 104 receives an input image 102. A luminance determination module 108 determines the luminance of the input image. In particular, the luminance determination module 108 determines the brightness of each pixel. In various examples, a luminance histogram can illustrate how many pixels fall into each brightness level. An image histogram module 106 can generate a luminance histogram and the image histogram module 106 determines whether there is a gap in the luminance histogram. In general, the luminance histogram has a gap if most pixels are at the lower end of the histogram (and have low brightness levels) while a small number of pixels are distributed at the high end of the histogram (and have high brightness levels), with few or no pixels in between. In some examples, the small number of pixels at the high end of the histogram, represent about 2% of the pixels in the input image 102 or less than 2% of the pixels in the input image 102. In some examples, the small number of pixels at the high end of the histogram, represent less than about 5% of the pixels in the input image 102, or less than about 10% of the pixels in the input image 102. In various examples, an image with a luminance histogram gap is an HDR image.

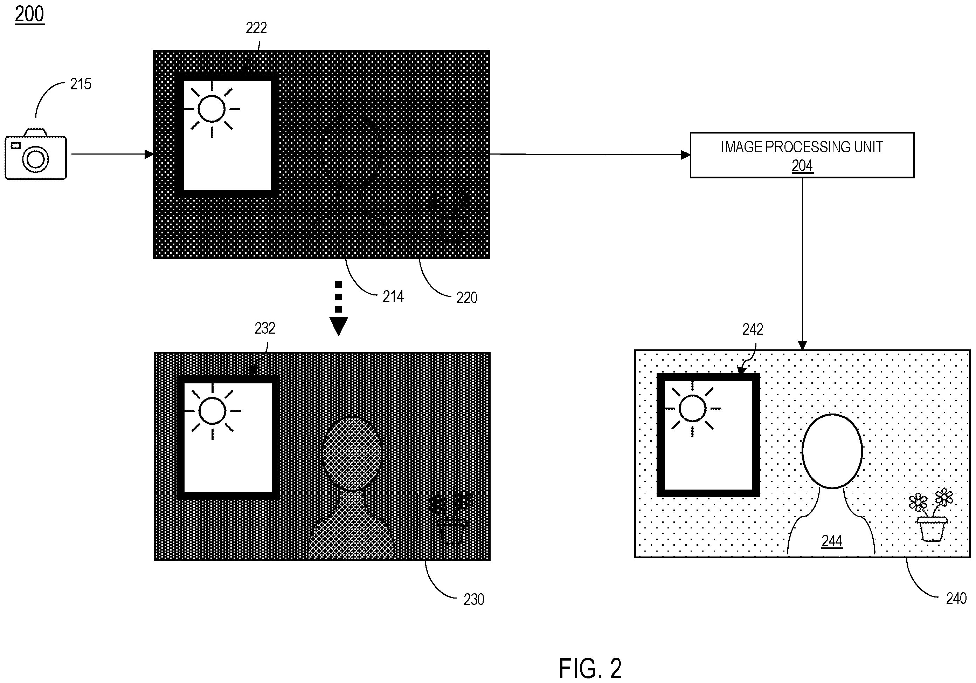

The tone mapping module 110 determines the output brightness of each pixel in the output image 112 by determining a luminance gain, where the luminance gain is the value by which each pixel's measured input luminance level is multiplied. In general, the luminance gain is a function of the input luminance and the luminance histogram. In particular, when the image histogram module 106 determines that there is a gap in the luminance histogram, the tone mapping module 110 generates a global tone mapping curve (i.e., a luminance gain curve) for tone mapping that provides increased contrast in the dark portion of the image while preserving the bright portions of the image and the input dynamic range. Global tone mapping is described in greater detail with respect to FIGS. 2, 3A-3E, 4, and 5. When the image histogram module 106 does not find a definable gap in the luminance histogram, the tone mapping module 110 can use a conventional tone mapping curve and perform typical tone mapping. The tone mapping module 110 generates the output image 112 with the output brightness of each pixel determined using the selected tone mapping curve. The image processing unit 104 outputs the output image 112.

*Example Global Tone Mapping Output*

FIG. 2 illustrates an example 200 of an image processed with a global tone mapping method, in accordance with various embodiments. In particular, a scene captured by the camera 215 in FIG. 2 is an indoor scene including a person in the foreground and a window in the background. The sun is shining through the window 212. The sun causes a very bright area 222 in the captured image 220. As shown in the example 200, the captured image 220 appears quite dark, with the exception of the bright portion 222 of the image representing the window. In various examples, a luminance histogram of the captured image 220 has a large gap, with most pixels having low brightness and a small portion of the pixels (those from the bright portion 222 of the captured image 220) having a very high brightness, and few to no pixels having a brightness in the gap in between.

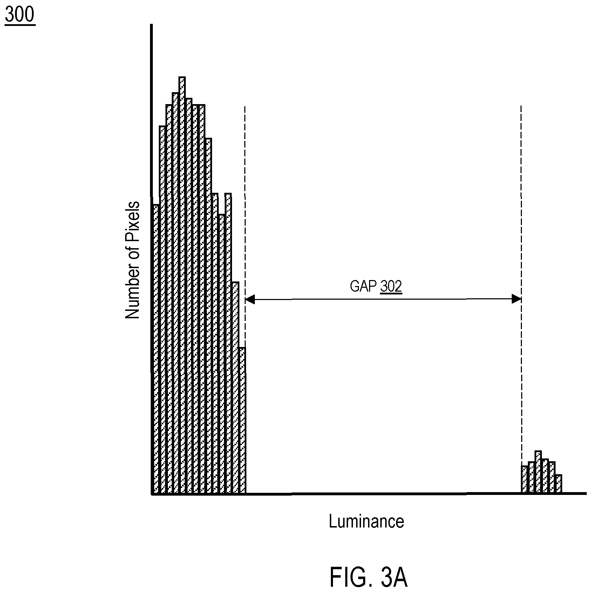

FIG. 3A is an example luminance histogram 300 illustrating a histogram gap 302, in accordance with various embodiments. In some examples, FIG. 3A is a luminance histogram 300 representing the brightness of pixels in the captured image 220.

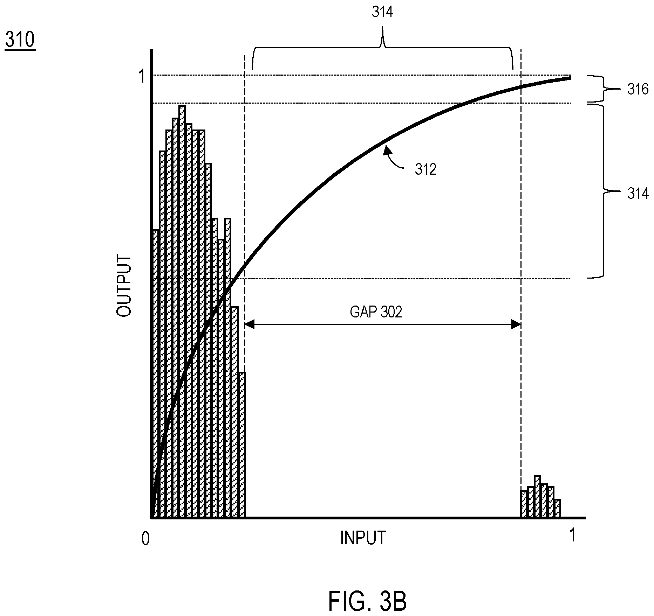

FIG. 3B shows an example 310 of a typical tone mapping curve (i.e., luminance gain curve) 312, in accordance with various embodiments. The typical tone mapping curve 312 can be used to adjust the brightness of pixels in an image to increase contrast. However, as shown in FIG. 3B, when the typical tone mapping curve 312 is used on a luminance histogram with a large gap 302, much of the tone mapping curve 312 is applied to luminance levels for which no input pixels have the selected luminance level. In particular, the portion 314 of the luminance gain curve 312 is not applied to any pixels as no input pixels fall into the input luminance values of that part of the tone mapping curve 312. Thus, when a tone mapping module applies the tone mapping curve 312 to the captured image 220, the dark portion of the output image 230 is only marginally brighter, and still appears too dark.

However, as described herein, using information about the histogram gap 302, the image processing unit 204 can perform global tone mapping on the captured image 220 to generate an output image 240 having increased contrast in the dark portion of the image while preserving the bright portion 242 of the image and the input dynamic range.

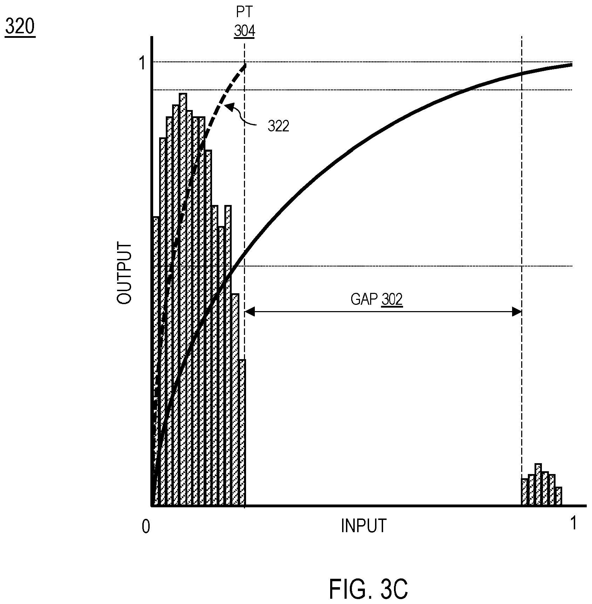

FIG. 3C shows an example 320 of auxiliary TM curve 322, in accordance with various embodiments. With reference to FIG. 3C, most of the image pixels in the luminance histogram 300 are located below a threshold 304. The threshold 304 can have a percentile value $PT$ representing the percentage of input image pixels having a measured input brightness level below the threshold 304. In some examples, the percentile value $PT$ is tunable and predetermined, and the threshold 304 is positioned at the highest measured input brightness level of the darkest $PT$ percent of input image pixels. In some examples, the brightness level of the threshold 304 on the x-axis is determined for any given input image. In some examples, a neural network can be used to determine an optimal percentile value $PT$ and/or a brightness level for the threshold 304.

An auxiliary TM curve ($TM_\alpha$) 322 is generated for the input pixels with a brightness between 0 and the threshold 304, with the auxiliary TM curve 322 having a maximal output at the threshold 304. While the auxiliary TM curve 322 increases dynamic range of the low brightness pixels, the auxiliary TM curve 322 is not used on the entire image because the pixels above the threshold 304 would reach brightness saturation, and thus, the input image would be clipped.

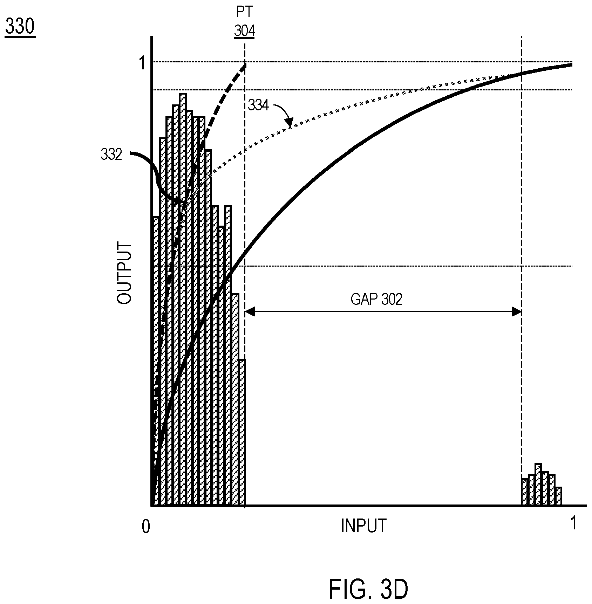

Instead, as shown in FIG. 3D, a connection point $CP$ is defined. In particular, an output brightness level (on the y-axis) is selected and/or pre-determined for the connection point. In some examples, the selected output brightness level for the connection point is between about 0.5 and about 0.7 (on the y-axis). FIG. 3C shows an example 330 of a connection point 332 on the auxiliary TM curve 322, in accordance with various embodiments. At the connection point CP, the auxiliary TM curve reaches the selected output brightness level ($Y_{CP}$). The corresponding measured input brightness level on the x-axis ($X_{CP}$) can be determined based on the auxiliary TM curve. In particular, point $X_{CP}$ is determined such that:

$$TM_\alpha(X_{CP}) = Y_{CP} \qquad\qquad (1)$$

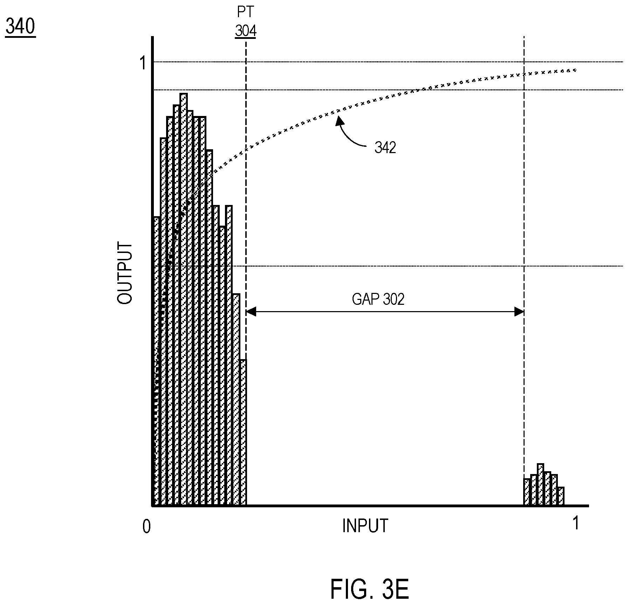

From the point $(X_{CP}, Y_{CP})$ 320, a tail curve $(F(x))$ 330 is generated for the input pixels with a brightness level higher than $X_{CP}$. Using the tail curve $(F(x))$ 330, for the input pixels with a brightness level higher than $X_{CP}$ avoids clipping (i.e., overexposure) at the higher brightness levels while also compressing the less important data in the bright portion of the image. FIG. 3E shows an example 340 of a full tone mapping curve 342 for use in global tone mapping as described herein, in accordance with various embodiments.

According to some implementations, to generate the full tone mapping curve 342, the slope SL of the auxiliary TM curve at the connection point $(X_{CP}, Y_{CP})$ is determined. In some examples, the slope can be determined as:

$$SL = TM'_\alpha(X_{CP}) \qquad\qquad (2)$$

The tail curve is also determined:

$$TM_{tail}(x) = F(x, t, g) \qquad\qquad (3)$$

In some examples, $F(x,t,g)$ is defined using the following formula and some constant parameters $t$ and $g$:

$$F(x) = (1 - Y_{CP}) * \frac{((x - X_{CP} + t)^g - t^g)}{((X_{END} - X_{CP} + t)^g - t^g)} + Y_{CP} \qquad\qquad (4)$$

In equation (4), $X_{END}$ is the point at which the original input signal ends. That is, $X_{END}$ is the last bin of the brightness histogram and has the greatest brightness level. According to various examples, the parameters $t$ and $g$ are defined such that the derivative of $F'(x,t,g)$ equals the slope SL:

$$F'(x, t, g) = SL \qquad\qquad (5)$$

In various examples, equation (5) facilitates a smoothness of the full tone mapping curve.

Thus, using equations (1)-(5), the full tone mapping curve $TM(x)$ is constructed as a concatenation of the $TM_\alpha(x)$ curve and the $TM_{tail}(x)$ curve:

$$TM(x) = \begin{cases} TM_\alpha(x), & 0 < x \le X_{CP} \\ TM_{tail}(x), & X_{CP} < x \le X_{END} \end{cases} \qquad\qquad (6)$$

The full tone mapping curve $TM(x)$ produces an output image having good contrast while not restricting the dynamic range of the input image data. The full tone mapping curve $TM(x)$ can be used for a global tone mapping transformation of the input image to generate the output image.

*Example Method of Global Tone Mapping*

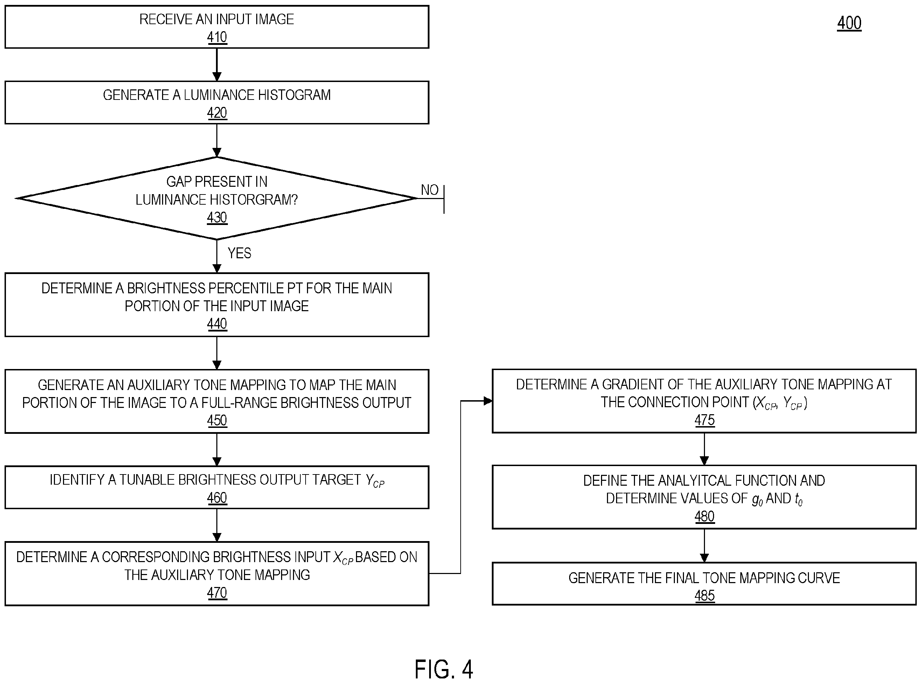

FIG. 4 is a flowchart showing a method 400 for generating a full tone mapping curve $TM(x)$, in accordance with various embodiments. Although the method 400 is described with reference to the flowchart illustrated in FIG. 4, many other methods for global tone mapping may alternatively be used. For example, the order of execution of the steps in FIG. 4 may be changed. As another example, some of the steps may be changed, eliminated, or combined. In various examples, the method 400 can be implemented by an image processing unit such as the image processing unit 104 of FIG. 1.

At step 410, an input image is received. In some examples, the input image can be an image frame of a video or other series of image frames. In some examples, the input image can be an image frame of a real time video.

At step 420, a luminance histogram is generated. In some examples, a luminance histogram is a brightness histogram. The luminance histogram plots a number of pixels at each of multiple brightness levels. Brightness levels can vary between a brightness level of zero (maximal darkness / minimal brightness) to a brightness level of one (maximal brightness). For each brightness level, the number of pixels of the input image having the selected brightness level is determined, resulting in the luminance histogram. In various examples, at step 420, the number of pixels at each brightness level is determined without generating an actual luminance histogram.

At step 430, it is determined whether there is a gap in the luminance histogram. In particular, it is determined whether there are multiple consecutive brightness levels with few or no pixels having those brightness levels. In some examples, the multiple consecutive brightness levels with few or no pixels include more than about a third of the brightness scale, in some examples, the multiple consecutive brightness levels include about half of the brightness scale, and in some examples, the multiple consecutive brightness levels include more than about half of the brightness scale. In general, a main portion of the image can have a low brightness level, and a small portion of the image can have a high brightness level. If there is a gap in the luminance histogram, the method 400 proceeds to step 440. If there is no gap in the luminance histogram, the method 400 ends.

At step 440, a brightness percentile for the main portion of the input image is determined. The brightness percentile *PT* can be a threshold on the x-axis luminance histogram. In various examples, the brightness percentile is a luminance percentile. In one example, the main portion of the input image is about 98% of the pixels, and represents about 98% of the image's brightness data. In some examples, this can be represented as: *PT = getBrightnessPercentile (imageData, brTH),* where *brTH* = 98. In other examples, the main portion of the input image is about 95% of the pixels, and represents about 95% of the image's brightness data, and in some examples, the main portion of the input image is more than 90% of the pixels, and represents more than 90% of the image's brightness data.

At step 450, an auxiliary tone mapping $TM_\alpha$ is generated, that maps the main portion of the image (representing 98% of the image's brightness data) to a full-range brightness output. The main portion of the image includes image pixels having a brightness at and/or below the brightness at the brightness percentile. In some examples, this can be represented as: $TM_\alpha = buildTMLUT(imageData, PT)$. In some examples, the auxiliary tone mapping can be done using a look-up table. In some examples, the auxiliary tone mapping can be generated using any tone mapping technique that yields a good brightness contrast.

At step 460, a tunable brightness output target $Y_{CP}$ for the auxiliary tone mapping $TM_\alpha$ is identified. In some examples, the brightness output is normalized to the full range output value, such that the maximal *Y* value is 1, and the tunable brightness output target $Y_{CP}$ is set to 0.6. Using $Y_{CP}$, at step 470, the corresponding brightness input $X_{CP}$ is determined. In some examples, the corresponding brightness input $X_{CP}$ is determined based on the auxiliary tone mapping $TM_\alpha$. In some examples, the point $(X_{CP}, Y_{CP})$ is a point on an auxiliary tone mapping curve. The point $(X_{CP}, Y_{CP})$ can be a connection point in the input-output tone mapping space, and the point $(X_{CP}, Y_{CP})$ can be the point where a brighter part of the tone mapping curve is connected to the auxiliary tone mapping curve to generate the full tone mapping curve.

At step 475, the gradient SL of the auxiliary tone mapping $TM_\alpha$ at the connection point $(X_{CP}, Y_{CP})$ is determined. The gradient can be the gradient from the left of the auxiliary tone mapping curve. In various examples, determining the gradient includes using the last two {input, output} pairs of the auxiliary tone mapping $TM_\alpha$, and dividing the differences.

At step 480, the analytical function is defined. In particular, the analytical function $F(x,t,g)$ can be defined as discussed with respect to equations (4) and (5) herein. Using the gradient from step 475 and the connection point $(X_{CP}, Y_{CP})$, the value of $g$ can be fixed and a corresponding value of t can be determined. For example, $g$ can be fixed at $(g_0 = 0.5)$, and $t_0$ can be determined using the following formula:

$$\begin{cases} Y_{CP} = F(X_{CP}, t_0, g_0) \\ SL = F'(X_{CP}, t_0, g_0) \end{cases}$$

where F' is the first derivative of F. In various examples, the result from formula above can be efficiently determined analytically or iteratively.

At step 485, using the values of $t_0$ and $g_0$ from step 480, the tail portion of the tone mapping curve can be defined as $TM_{tail}(x) = F(x, t_0, g_0)$ for any input x that is greater than $x_{CP}$. Thus, as noted above, the full tone mapping curve is:

$$TM(x) = \begin{cases} TM_\alpha(x), & 0 < x \le X_{CP} \\ TM_{tail}(x), & X_{CP} < x \le X_{END} \end{cases}$$

where $X_{END}$ I the point at which the original input signal ends.

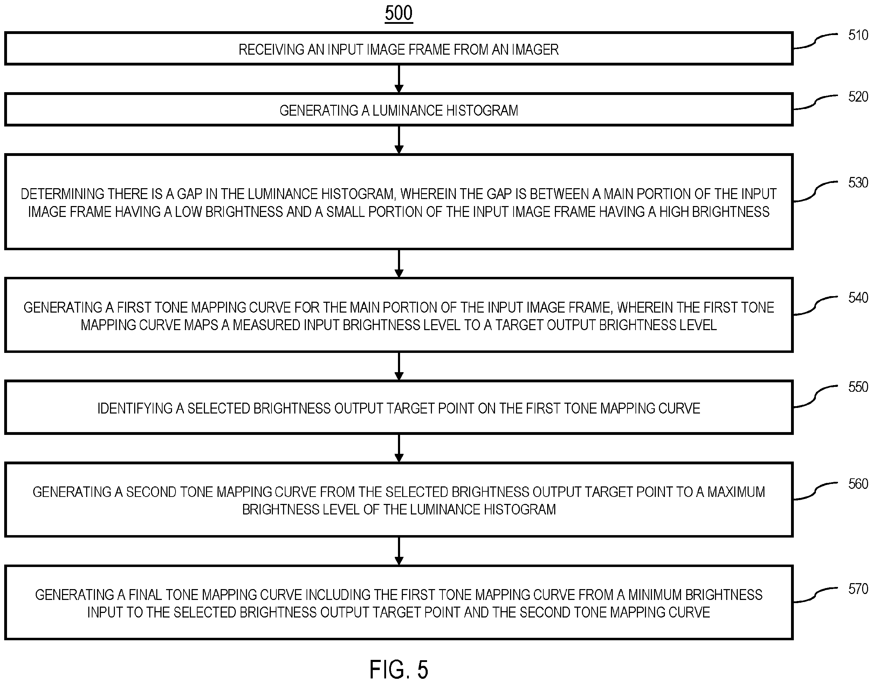

FIG. 5 is a flowchart showing a high level method 500 for generating a full tone mapping curve *TM(x),* in accordance with various embodiments. Although the method 500 is described with reference to the flowchart illustrated in FIG. 5, many other methods for global tone mapping may alternatively be used. For example, the order of execution of the steps in FIG. 5 may be changed. As another example, some of the steps may be changed, eliminated, or combined. In various examples, the method 500 can be implemented by an image processing unit such as the image processing unit 104 of FIG. 1.

At step 510, an input image frame is received from an image sensor. At step 520, a luminance histogram is generated. In various examples, as described above, the luminance histogram plots a number of pixels at each of multiple brightness levels. For each brightness level, the number of pixels of the input image having the selected brightness is determined, resulting in the luminance histogram. In various examples, at step 520, the number of pixels at each brightness level is determined without generating an actual luminance histogram.

At step 530, it is determined that there is a gap in the luminance histogram. In particular, it is determined whether there are multiple consecutive brightness levels with few or no pixels having those brightness levels. In various examples, a main potion of the input image frame has a low brightness level, and a small portion of the input image frame has a high brightness level. The gap represents the multiple consecutive brightness levels with few or no pixels between the main portion of the input image frame and the small portion.

At step 540, a first tone mapping curve is generated for the main portion of the input image frame. The first tone mapping curve maps a measured input brightness level to a target output brightness level. In general, because the main portion of the image has a low brightness level, the first tone mapping curve generates a target output brightness level for each measured input brightness level that is greater than the measured input brightness level, thereby increasing a contrast between the brightness levels of the pixels of the input image frame. In one example, the measured input brightness levels of the main portion vary between zero (minimal brightness / complete darkness) and a brightness level of about 0.3 (where the maximum brightness level is 1), and the first tone mapping curve maps the measured input brightness levels between 0-0.3 to target output brightness levels between zero and one (0 - 1 brightness levels).

At step 550, a selected brightness output target is identified, and the point on the first tone mapping curve having the selected brightness output target is identified (this is the selected brightness output target point). In one example, the selected brightness output target can be about 0.6 on the 0 - 1- brightness level scale. In some examples, the corresponding measured input brightness level on the first tone mapping curve is also identified.

At step 560, a second tone mapping curve is generated, wherein the second tone mapping curve is a curve from the selected brightness output target point on the first tone mapping curve to the maximum brightness level of the luminance histogram. Thus, in the example in which the selected brightness output target is 0.6, the second tone mapping curve is generated from the point on the first tone mapping curve at which the selected brightness output target is 0.6, to the point on the luminance histogram having the maximal brightness level of 1. In some examples, the selected brightness output target is 0.6, and the second tone mapping curve is generated from the point on the first tone mapping curve at which the selected brightness output target is 0.6, to a point at which a measured input brightness level is 1 and the brightness output target is also 1.

At step 570, a full tone mapping curve is generated, where the full tone mapping curve includes a first portion of the first tone mapping curve and the second tone mapping curve. In particular, the full tone mapping curve includes the portion of the first tone mapping curve from a minimum brightness input to the selected brightness output target point identified at step 550 coupled to the second tone mapping curve.

*Example DNN System*

FIG. 6 is a block diagram of an example DNN system 600, in accordance with various embodiments. The DNN system 600 trains DNNs for various tasks, including image processing of captured image frames. The DNN system 600 includes an interface module 610, an image processing unit 620, a training module 630, a validation module 640, an inference module 650, and a datastore 660. In other embodiments, alternative configurations, different or additional components may be included in the DNN system 600. Further, functionality attributed to a component of the DNN system 600 may be accomplished by a different component included in the DNN system 600 or a different system. The DNN system 600 or a component of the DNN system 600 (e.g., the training module 630 or inference module 650) may include the computing device 700 in FIG. 7.

The interface module 610 facilitates communications of the DNN system 600 with other systems. As an example, the interface module 610 supports the DNN system 600 to distribute trained DNNs to other systems, e.g., computing devices configured to apply DNNs to perform tasks. As another example, the interface module 610 establishes communications between the DNN system 600 with an external database to receive data that can be used to train DNNs or input into DNNs to perform tasks. In some embodiments, data received by the interface module 610 may have a data structure, such as a matrix. In some embodiments, data received by the interface module 610 may be an image, a series of images, and/or a video stream.

The image processing unit 620 performs image processing including tone mapping on input images. In general, the image processing unit 620 reviews the input data and performs global tone mapping on the input images. In various examples, the image processing unit 620 identifies HDR images.

The training module 630 trains DNNs by using training datasets. In some embodiments, a training dataset for training a DNN may include one or more images and/or videos, each of which may be a training sample. In some examples, the training module 630 trains the image processing unit 620. The training module 630 may receive real-world video data for processing with the image processing unit 620 as described herein. In some embodiments, the training module 630 may input different data into different layers of the DNN. For every subsequent DNN layer, the input data may be less than the previous DNN layer. In some embodiments, a part of the training dataset may be used to initially train the DNN, and the rest of the training dataset may be held back as a validation subset used by the validation module 640 to validate performance of a trained DNN. The portion of the training dataset not including the tuning subset and the validation subset may be used to train the DNN.

The training module 630 also determines hyperparameters for training the DNN. Hyperparameters are variables specifying the DNN training process. Hyperparameters are different from parameters inside the DNN (e.g., weights of filters). In some embodiments, hyperparameters include variables determining the architecture of the DNN, such as number of hidden layers, etc. Hyperparameters also include variables which determine how the DNN is trained, such as batch size, number of epochs, etc. A batch size defines the number of training samples to work through before updating the parameters of the DNN. The batch size is the same as or smaller than the number of samples in the training dataset. The training dataset can be divided into one or more batches. The number of epochs defines how many times the entire training dataset is passed forward and backwards through the entire network. The number of epochs defines the number of times that the deep learning algorithm works through the entire training dataset. One epoch means that each training sample in the training dataset has had an opportunity to update the parameters inside the DNN. An epoch may include one or more batches. The number of epochs may be 1, 10, 50, 100, or even larger.

The training module 630 defines the architecture of the DNN, e.g., based on some of the hyperparameters. The architecture of the DNN includes an input layer, an output layer, and a plurality of hidden layers. The input layer of an DNN may include tensors (e.g., a multidimensional array) specifying attributes of the input image, such as the height of the input image, the width of the input image, and the depth of the input image (e.g., the number of bits specifying the color of a pixel in the input image). The output layer includes labels of objects in the input layer. The hidden layers are layers between the input layer and output layer. The hidden layers include one or more convolutional layers and one or more other types of layers, such as pooling layers, fully connected layers, normalization layers, softmax or logistic layers, and so on. The convolutional layers of the DNN abstract the input image to a feature map that is represented by a tensor specifying the feature map height, the feature map width, and the feature map channels (e.g., red, green, blue images include 3 channels). A pooling layer is used to reduce the spatial volume of input image after convolution. It is used between 2 convolution layers. A fully connected layer involves weights, biases, and neurons. It connects neurons in one layer to neurons in another layer. It is used to classify images between different categories by training.

In the process of defining the architecture of the DNN, the training module 630 also adds an activation function to a hidden layer or the output layer. An activation function of a layer transforms the weighted sum of the input of the layer to an output of the layer. The activation function may be, for example, a rectified linear unit activation function, a tangent activation function, or other types of activation functions.

After the training module 630 defines the architecture of the DNN, the training module 630 inputs a training dataset into the DNN. The training dataset includes a plurality of training samples. An example of a training dataset includes a series of images of a video stream. The internal parameters include weights of filters in the convolutional layers of the DNN. In some embodiments, the training module 630 uses a cost function to minimize the differences. The training module 630 may train the DNN for a predetermined number of epochs. The number of epochs is a hyperparameter that defines the number of times that the deep learning algorithm will work through the entire training dataset. One epoch means that each sample in the training dataset has had an opportunity to update internal parameters of the DNN. After the training module 630 finishes the predetermined number of epochs, the training module 630 may stop updating the parameters in the DNN. The DNN having the updated parameters is referred to as a trained DNN.

The validation module 640 verifies accuracy of trained DNNs. In some embodiments, the validation module 640 inputs samples in a validation dataset into a trained DNN and uses the outputs of the DNN to determine the model accuracy. In some embodiments, a validation dataset may be formed of some or all the samples in the training dataset. Additionally or alternatively, the validation dataset includes additional samples, other than those in the training sets. In some embodiments, the validation module 640 may determine an accuracy score measuring the precision, recall, or a combination of precision and recall of the DNN. The validation module 640 may use the following metrics to determine the accuracy score: Precision = TP / (TP + FP) and Recall = TP / (TP + FN), where precision may be how many the reference classification model correctly predicted (TP or true positives) out of the total it predicted (TP + FP or false positives), and recall may be how many the reference classification model correctly predicted (TP) out of the total number of objects that did have the property in question (TP + FN or false negatives). The F-score (F-score = 2 * PR / (P + R)) unifies precision and recall into a single measure.

The validation module 640 may compare the accuracy score with a threshold score. In an example where the validation module 640 determines that the accuracy score of the augmented model is lower than the threshold score, the validation module 640 instructs the training module 630 to re-train the DNN. In one embodiment, the training module 630 may iteratively re-train the DNN until the occurrence of a stopping condition, such as the accuracy measurement indication that the DNN may be sufficiently accurate, or a number of training rounds having taken place.

The inference module 650 applies the trained or validated DNN to perform tasks. The inference module 650 may run inference processes of a trained or validated DNN. For instance, the inference module 650 may input real-world data into the DNN and receive an output of the DNN. The output of the DNN may provide a solution to the task for which the DNN is trained for. The inference module 650 may aggregate the outputs of the DNN to generate a final result of the inference process. In some embodiments, the inference module 650 may distribute the DNN to other systems, e.g., computing devices in communication with the DNN system 600, for the other systems to apply the DNN to perform the tasks. The distribution of the DNN may be done through the interface module 610. In some embodiments, the DNN system 600 may be implemented in a server, such as a cloud server, an edge service, and so on. The computing devices may be connected to the DNN system 600 through a network. Examples of the computing devices include edge devices.

The datastore 660 stores data received, generated, used, or otherwise associated with the DNN system 600. For example, the datastore 660 stores video processed by the image processing unit 620 or used by the training module 630, validation module 640, and the inference module 650. The datastore 660 may also store other data generated by the training module 630 and validation module 640, such as the hyperparameters for training DNNs, internal parameters of trained DNNs (e.g., values of tunable parameters of activation functions, such as Fractional Adaptive Linear Units (FALUs)), etc. In the embodiment of FIG. 6, the datastore 660 is a component of the DNN system 600. In other embodiments, the datastore 660 may be external to the DNN system 600 and communicate with the DNN system 600 through a network.

*Example Computing Device*

FIG. 7 is a block diagram of an example computing device 700, in accordance with various embodiments. In some embodiments, the computing device 700 may be used for at least part of the deep learning system 600 in FIG. 6. A number of components are illustrated in FIG. 7 as included in the computing device 700, but any one or more of these components may be omitted or duplicated, as suitable for the application. In some embodiments, some or all of the components included in the computing device 700 may be attached to one or more motherboards. In some embodiments, some or all of these components are fabricated onto a single system on a chip (SoC) die. Additionally, in various embodiments, the computing device 700 may not include one or more of the components illustrated in FIG. 7, but the computing device 700 may include interface circuitry for coupling to the one or more components. For example, the computing device 700 may not include a display device 706, but may include display device interface circuitry (e.g., a connector and driver circuitry) to which a display device 706 may be coupled. In another set of examples, the computing device 700 may not include a video input device 718 or a video output device 708, but may include video input or output device interface circuitry (e.g., connectors and supporting circuitry) to which a video input device 718 or video output device 708 may be coupled.

The computing device 700 may include a processing device 702 (e.g., one or more processing devices). The processing device 702 processes electronic data from registers and/or memory to transform that electronic data into other electronic data that may be stored in registers and/or memory. The computing device 700 may include a memory 704, which may itself include one or more memory devices such as volatile memory (e.g., DRAM), nonvolatile memory (e.g., read-only memory (ROM)), high bandwidth memory (HBM), flash memory, solid state memory, and/or a hard drive. In some embodiments, the memory 704 may include memory that shares a die with the processing device 702. In some embodiments, the memory 704 includes one or more non-transitory computer-readable media storing instructions executable for occupancy mapping or collision detection, e.g., the methods 400 and 500 described above in conjunction with FIGS. 4 and 5, or some operations performed by the image processing unit 104 of FIG. 1, or some operations performed by the DNN system 600 of FIG. 6. The instructions stored in the one or more non-transitory computer-readable media may be executed by the processing device 702.

In some embodiments, the computing device 700 may include a communication chip 712 (e.g., one or more communication chips). For example, the communication chip 712 may be configured for managing wireless communications for the transfer of data to and from the computing device 700. The term "wireless" and its derivatives may be used to describe circuits, devices, systems, methods, techniques, communications channels, etc., that may communicate data using modulated electromagnetic radiation through a nonsolid medium. The term does not imply that the associated devices do not contain any wires, although in some embodiments they might not.

The communication chip 712 may implement any of a number of wireless standards or protocols, including but not limited to Institute for Electrical and Electronic Engineers (IEEE) standards including Wi-Fi (IEEE 802.10 family), IEEE 802.16 standards (e.g., IEEE 802.16-2005 Amendment), Long-Term Evolution (LTE) project along with any amendments, updates, and/or revisions (e.g., advanced LTE project, ultramobile broadband (UMB) project (also referred to as "3GPP2"), etc.). IEEE 802.16 compatible Broadband Wireless Access (BWA) networks are generally referred to as WiMAX networks, an acronym that stands for worldwide interoperability for microwave access, which is a certification mark for products that pass conformity and interoperability tests for the IEEE 802.16 standards. The communication chip 712 may operate in accordance with a Global System for Mobile Communication (GSM), General Packet Radio Service (GPRS), Universal Mobile Telecommunications System (UMTS), High Speed Packet Access (HSPA), Evolved HSPA (E-HSPA), or LTE network. The communication chip 712 may operate in accordance with Enhanced Data for GSM Evolution (EDGE), GSM EDGE Radio Access Network (GERAN), Universal Terrestrial Radio Access Network (UTRAN), or Evolved UTRAN (E-UTRAN). The communication chip 712 may operate in accordance with code-division multiple access (CDMA), Time Division Multiple Access (TDMA), Digital Enhanced Cordless Telecommunications (DECT), Evolution-Data Optimized (EV-DO), and derivatives thereof, as well as any other wireless protocols that are designated as 3G, 4G, 5G, and beyond. The communication chip 712 may operate in accordance with other wireless protocols in other embodiments. The computing device 700 may include an antenna 722 to facilitate wireless communications and/or to receive other wireless communications (such as AM or FM radio transmissions).

In some embodiments, the communication chip 712 may manage wired communications, such as electrical, optical, or any other suitable communication protocols (e.g., the Ethernet). As noted above, the communication chip 712 may include multiple communication chips. For instance, a first communication chip 712 may be dedicated to shorter-range wireless communications such as Wi-Fi or Bluetooth, and a second communication chip 712 may be dedicated to longer-range wireless communications such as global positioning system (GPS), EDGE, GPRS, CDMA, WiMAX, LTE, EV-DO, or others. In some embodiments, a first communication chip 712 may be dedicated to wireless communications, and a second communication chip 712 may be dedicated to wired communications.

The computing device 700 may include battery/power circuitry 714. The battery/power circuitry 714 may include one or more energy storage devices (e.g., batteries or capacitors) and/or circuitry for coupling components of the computing device 700 to an energy source separate from the computing device 700 (e.g., AC line power).

The computing device 700 may include a display device 706 (or corresponding interface circuitry, as discussed above). The display device 706 may include any visual indicators, such as a heads-up display, a computer monitor, a projector, a touchscreen display, a liquid crystal display (LCD), a light-emitting diode display, or a flat panel display, for example.

The computing device 700 may include a video output device 708 (or corresponding interface circuitry, as discussed above). The video output device 708 may include any device that generates an audible indicator, such as speakers, headsets, or earbuds, for example.

The computing device 700 may include a video input device 718 (or corresponding interface circuitry, as discussed above). The video input device 718 may include any device that generates a signal representative of a sound, such as microphones, microphone arrays, or digital instruments (e.g., instruments having a musical instrument digital interface (MIDI) output).

The computing device 700 may include a GPS device 716 (or corresponding interface circuitry, as discussed above). The GPS device 716 may be in communication with a satellite-based system and may receive a location of the computing device 700, as known in the art.

The computing device 700 may include another output device 710 (or corresponding interface circuitry, as discussed above). Examples of the other output device 710 may include a video codec, a video codec, a printer, a wired or wireless transmitter for providing information to other devices, or an additional storage device.

The computing device 700 may include another input device 720 (or corresponding interface circuitry, as discussed above). Examples of the other input device 720 may include an accelerometer, a gyroscope, a compass, an image capture device, a keyboard, a cursor control device such as a mouse, a stylus, a touchpad, a bar code reader, a Quick Response (QR) code reader, any sensor, or a radio frequency identification (RFID) reader.

The computing device 700 may have any desired form factor, such as a handheld or mobile computer system (e.g., a cell phone, a smart phone, a mobile internet device, a music player, a tablet computer, a laptop computer, a netbook computer, an ultrabook computer, a personal digital assistant (PDA), an ultramobile personal computer, etc.), a desktop computer system, a server or other networked computing component, a printer, a scanner, a monitor, a set-top box, an entertainment control unit, a vehicle control unit, a digital camera, a digital video recorder, or a wearable computer system. In some embodiments, the computing device 700 may be any other electronic device that processes data.

*Selected Examples*

The following paragraphs provide various examples of the embodiments disclosed herein.

Example 1 provides a computer-implemented method, comprising: receiving an input image frame from an imager; generating a luminance histogram; determining there is a gap in the luminance histogram, wherein the gap is between a main portion of the input image frame having a low brightness and a small portion of the input image frame having a high brightness; generating a first tone mapping curve for the main portion of the input image frame, wherein the first tone mapping curve maps a measured input brightness level to a target output brightness level; identifying a selected brightness output target point on the first tone mapping curve; generating a second tone mapping curve from the selected brightness output target point to a maximum brightness level of the luminance histogram; and generating a final tone mapping curve including the first tone mapping curve from a minimum brightness input to the selected brightness output target point and the second tone mapping curve.

Example 2 provides the computer-implemented method of example 1, further comprising determining a percentile for the main portion, wherein the percentile represents a first number of pixels in the main portion compared to a total number of pixels in the input image frame.

Example 3 provides the computer-implemented method according to example 2, wherein the percentile is greater than 90 percent.

Example 4 provides the computer-implemented method according to any of the above examples, further comprising determining a selected brightness input level corresponding to the selected brightness output target point on the first tone mapping curve.

Example 5 provides the computer-implemented method according to any of the above examples, further comprising determining a gradient of the first tone mapping curve at the selected brightness input level.

Example 6 provides the computer-implemented method according to any of the above examples, wherein determining there is the gap in the luminance histogram includes identifying a no-pixel portion of the luminance histogram, wherein approximately no pixels have a luminance level in the no-pixel portion.

Example 7 provides the computer-implemented method according to any of the above examples, further comprising using the final tone mapping curve to generate an output image frame, wherein the output image frame includes a first output portion corresponding to the main portion of the input image frame, and wherein the first output portion has an increased contrast compared to the main portion of the input image frame.

Example 8 provides one or more non-transitory computer-readable media storing instructions executable to perform operations, the operations comprising: receiving an input image frame from an imager; generating a luminance histogram; determining there is a gap in the luminance histogram, wherein the gap is between a main portion of the input image frame having a low brightness and a small portion of the input image frame having a high brightness; generating a first tone mapping curve for the main portion of the input image frame, wherein the first tone mapping curve maps a measured input brightness level to a target output brightness level; identifying a selected brightness output target point on the first tone mapping curve; generating a second tone mapping curve from the selected brightness output target point to a maximum brightness level of the luminance histogram; and generating a final tone mapping curve including the first tone mapping curve from a minimum brightness input to the selected brightness output target point and the second tone mapping curve.

Example 9 provides the one or more non-transitory computer-readable media of example 8, the operations further comprising determining a percentile for the main portion, wherein the percentile represents a first number of pixels in the main portion compared to a total number of pixels in the input image frame.

Example 10 provides the one or more non-transitory computer-readable media of example 9, wherein the percentile is greater than 90 percent.

Example 11 provides the one or more non-transitory computer-readable media of any of the above examples, the operations further comprising determining a selected brightness input level corresponding to the selected brightness output target point on the first tone mapping curve.

Example 12 provides the one or more non-transitory computer-readable media of any of the above examples, the operations further comprising determining a gradient of the first tone mapping curve at the selected brightness input level.

Example 13 provides the one or more non-transitory computer-readable media of any of the above examples, wherein determining there is the gap in the luminance histogram includes identifying a no-pixel portion of the luminance histogram, wherein approximately no pixels have a luminance level in the no-pixel portion.

Example 14 provides the one or more non-transitory computer-readable media of any of the above examples, further comprising using the final tone mapping curve to generate an output image frame, wherein the output image frame includes a first output portion corresponding to the main portion of the input image frame, and wherein the first output portion has an increased contrast compared to the main portion of the input image frame.

Example 15 provides an apparatus, comprising a computer processor for executing computer program instructions; and a non-transitory computer-readable memory storing computer program instructions executable by the computer processor to perform operations comprising: receiving an input image frame from an imager; generating a luminance histogram; determining there is a gap in the luminance histogram, wherein the gap is between a main portion of the input image frame having a low brightness and a small portion of the input image frame having a high brightness; generating a first tone mapping curve for the main portion of the input image frame, wherein the first tone mapping curve maps a measured input brightness level to a target output brightness level; identifying a selected brightness output target point on the first tone mapping curve; generating a second tone mapping curve from the selected brightness output target point to a maximum brightness level of the luminance histogram; and generating a final tone mapping curve including the first tone mapping curve from a minimum brightness input to the selected brightness output target point and the second tone mapping curve.

Example 16 provides the apparatus of example 15, wherein the operations further comprise determining a percentile for the main portion, wherein the percentile represents a first number of pixels in the main portion compared to a total number of pixels in the input image frame.

Example 17 provides the apparatus of any of the above examples, wherein the operations further comprise determining a selected brightness input level corresponding to the selected brightness output target point on the first tone mapping curve.

Example 18 provides the apparatus of any of the above examples, wherein the operations further comprise determining a gradient of the first tone mapping curve at the selected brightness input level.

Example 19 provides the apparatus of any of the above examples, wherein determining there is the gap in the luminance histogram includes identifying a no-pixel portion of the luminance histogram, wherein approximately no pixels have a luminance level in the no-pixel portion.

Example 20 provides the apparatus of any of the above examples, wherein the operations further comprise using the final tone mapping curve to generate an output image frame, wherein the output image frame includes a first output portion corresponding to the main portion of the input image frame, and wherein the first output portion has an increased contrast compared to the main portion of the input image frame.

Example 21 provides the computer-implemented method, one or more non-transitory computer-readable media, and/or apparatus of any of the above examples wherein determining a gradient of the first tone mapping curve at the selected brightness input level includes determining the gradient based on the selected brightness output target point and an input point corresponding to the selected brightness input level.

Example 22 provides the computer-implemented method, one or more non-transitory computer-readable media, and/or apparatus of any of the above examples wherein determining a gradient of the first tone mapping curve at the selected brightness input level includes determining the gradient based on a first pair of points on the first tone mapping curve and a second pair of points on the first tone mapping curve, wherein the first pair of points includes the selected brightness output target point and an input point corresponding to the selected brightness input level.

Example 23 provides the computer-implemented method, one or more non-transitory computer-readable media, and/or apparatus of any of the above examples wherein the first tone mapping curve includes a plurality of pairs of adjacent points, and wherein the second pair of points is adjacent to the first pair of points.

Example 24 provides the computer-implemented method, one or more non-transitory computer-readable media, and/or apparatus of any of the above examples, wherein the first pair of points includes the selected brightness output target point and an input point corresponding to the selected brightness input level.

The above description of illustrated implementations of the disclosure, including what is described in the Abstract, is not intended to be exhaustive or to limit the disclosure to the precise forms disclosed. While specific implementations of, and examples for, the disclosure are described herein for illustrative purposes, various equivalent modifications are possible within the scope of the disclosure, as those skilled in the relevant art will recognize. These modifications may be made to the disclosure in light of the above detailed description.

**Claims**

1. A computer-implemented method, comprising:

    receiving an input image frame from an imager;
    generating a luminance histogram;
    determining there is a gap in the luminance histogram, wherein the gap is between a main portion of the input image frame having a low brightness and a small portion of the input image frame having a high brightness;
    generating a first tone mapping curve for the main portion of the input image frame, wherein the first tone mapping curve maps a measured input brightness level to a target output brightness level;
    identifying a selected brightness output target point on the first tone mapping curve;
    generating a second tone mapping curve from the selected brightness output target point to a maximum brightness level of the luminance histogram; and
    generating a final tone mapping curve including the first tone mapping curve from a minimum brightness input to the selected brightness output target point and the second tone mapping curve.

2. The computer-implemented method according to claim 1, further comprising determining a percentile for the main portion, wherein the percentile represents a first number of pixels in the main portion compared to a total number of pixels in the input image frame.

3. The computer-implemented method according to claim 2, wherein the percentile is greater than 90 percent.

4. The computer-implemented method according to any of claims 1-3, further comprising determining a selected brightness input level corresponding to the selected brightness output target point on the first tone mapping curve.

5. The computer-implemented method according to claim 4, further comprising determining a gradient of the first tone mapping curve at the selected brightness input level.

6. The computer-implemented method according to any of claims 1-3, wherein determining there is the gap in the luminance histogram includes identifying a no-pixel portion of the luminance histogram, wherein approximately no pixels have a luminance level in the no-pixel portion.

7. The computer-implemented method according to any of claims 1-3, further comprising using the final tone mapping curve to generate an output image frame, wherein the output image frame includes a first output portion corresponding to the main portion of the input image frame, and wherein the first output portion has an increased contrast compared to the main portion of the input image frame.

8. One or more non-transitory computer-readable media storing instructions executable to perform operations, the operations comprising:

receiving an input image frame from an imager;
generating a luminance histogram;
determining there is a gap in the luminance histogram, wherein the gap is between a main portion of the input image frame having a low brightness and a small portion of the input image frame having a high brightness;
generating a first tone mapping curve for the main portion of the input image frame, wherein the first tone mapping curve maps a measured input brightness level to a target output brightness level;
identifying a selected brightness output target point on the first tone mapping curve;
generating a second tone mapping curve from the selected brightness output target point to a maximum brightness level of the luminance histogram; and
generating a final tone mapping curve including the first tone mapping curve from a minimum brightness input to the selected brightness output target point and the second tone mapping curve.

9. The one or more non-transitory computer-readable media according to claim 8, the operations further comprising determining a percentile for the main portion, wherein the percentile represents a first number of pixels in the main portion compared to a total number of pixels in the input image frame.

10. The one or more non-transitory computer-readable media according to claim 9, wherein the percentile is greater than 90 percent.

11. The one or more non-transitory computer-readable media according to any of claims 8-10, the operations further comprising determining a selected brightness input level corresponding to the selected brightness output target point on the first tone mapping curve.

12. The one or more non-transitory computer-readable media according to claim 11, the operations further comprising determining a gradient of the first tone mapping curve at the selected brightness input level.

13. The one or more non-transitory computer-readable media according to any of claims 8-10, wherein determining there is the gap in the luminance histogram includes identifying a no-pixel portion of the luminance histogram, wherein approximately no pixels have a luminance level in the no-pixel portion.

14. The one or more non-transitory computer-readable media according to any of claims 8-10, further comprising using the final tone mapping curve to generate an output image frame, wherein the output image frame includes a first output portion corresponding to the main portion of the input image frame, and wherein the first output portion has an increased contrast compared to the main portion of the input image frame.

15. An apparatus, comprising:

a computer processor for executing computer program instructions; and
a non-transitory computer-readable memory storing computer program instructions executable by the computer processor to perform operations comprising:

receiving an input image frame from an imager;
generating a luminance histogram;
determining there is a gap in the luminance histogram, wherein the gap is between a main portion of the input image frame having a low brightness and a small portion of the input image frame having a high brightness;
generating a first tone mapping curve for the main portion of the input image frame, wherein the first tone mapping curve maps a measured input brightness level to a target output brightness level;
identifying a selected brightness output target point on the first tone mapping curve;
generating a second tone mapping curve from the selected brightness output target point to a maximum brightness level of the luminance histogram; and

generating a final tone mapping curve including the first tone mapping curve from a minimum brightness input to the selected brightness output target point and the second tone mapping curve.

100

input image
102

IMAGE PROCESSING UNIT
104

LUMINANCE DETERMINATION
108

IMAGE HISTOGRAM MODULE
106

TONE MAPPING
110

output image
112

FIG. 1

FIG. 2

EP 4 625 309 A1

300

FIG. 3A

FIG. 3B

FIG. 3C

FIG. 3D

EP 4 625 309 A1

FIG. 3E

RECEIVE AN INPUT IMAGE
410

GENERATE A LUMINANCE HISTOGRAM
420

GAP PRESENT IN
LUMINANCE HISTORGRAM?
430

NO

YES

DETERMINE A BRIGHTNESS PERCENTILE PT FOR THE MAIN
PORTION OF THE INPUT IMAGE
440

GENERATE AN AUXILIARY TONE MAPPING TO MAP THE MAIN
PORTION OF THE IMAGE TO A FULL-RANGE BRIGHTNESS OUTPUT
450

DETERMINE A GRADIENT OF THE AUXILIARY TONE MAPPING AT
THE CONNECTION POINT $(X_{CP}, Y_{CP})$
475

IDENTIFY A TUNABLE BRIGHTNESS OUTPUT TARGET $Y_{CP}$
460

DEFINE THE ANALYITCAL FUNCTION AND
DETERMINE VALUES OF $g_0$ AND $t_0$
480

DETERMINE A CORRESPONDING BRIGHTNESS INPUT $X_{CP}$ BASED ON
THE AUXILIARY TONE MAPPING
470

GENERATE THE FINAL TONE MAPPING CURVE
485

400

FIG. 4

RECEIVING AN INPUT IMAGE FRAME FROM AN IMAGER — 510

GENERATING A LUMINANCE HISTOGRAM — 520

DETERMINING THERE IS A GAP IN THE LUMINANCE HISTOGRAM, WHEREIN THE GAP IS BETWEEN A MAIN PORTION OF THE INPUT IMAGE FRAME HAVING A LOW BRIGHTNESS AND A SMALL PORTION OF THE INPUT IMAGE FRAME HAVING A HIGH BRIGHTNESS — 530

GENERATING A FIRST TONE MAPPING CURVE FOR THE MAIN PORTION OF THE INPUT IMAGE FRAME, WHEREIN THE FIRST TONE MAPPING CURVE MAPS A MEASURED INPUT BRIGHTNESS LEVEL TO A TARGET OUTPUT BRIGHTNESS LEVEL — 540

IDENTIFYING A SELECTED BRIGHTNESS OUTPUT TARGET POINT ON THE FIRST TONE MAPPING CURVE — 550

GENERATING A SECOND TONE MAPPING CURVE FROM THE SELECTED BRIGHTNESS OUTPUT TARGET POINT TO A MAXIMUM BRIGHTNESS LEVEL OF THE LUMINANCE HISTOGRAM — 560

GENERATING A FINAL TONE MAPPING CURVE INCLUDING THE FIRST TONE MAPPING CURVE FROM A MINIMUM BRIGHTNESS INPUT TO THE SELECTED BRIGHTNESS OUTPUT TARGET POINT AND THE SECOND TONE MAPPING CURVE — 570

FIG. 5

Deep Learning System
600

Interface Module
610

Temporal Noise
Reducer
620

Training Module
630

Validation Module
640

Inference Module
650

Datastore
660

FIG. 6

COMPUTING DEVICE
700

| | |
|---|---|
| PROCESSING DEVICE 702 | COMMUNICATION CHIP 712 |
| MEMORY 704 | BATTERY/POWER 714 |
| DISPLAY DEVICE 706 | GPS DEVICE 716 |
| VIDEO OUTPUT DEVICE 708 | VIDEO INPUT DEVICE 718 |
| OTHER OUTPUT DEVICE 710 | OTHER INPUT DEVICE 720 |

ANTENNA
722

FIG. 7

EP 4 625 309 A1

Europäisches
Patentamt

European
Patent Office

Office européen
des brevets

# EUROPEAN SEARCH REPORT

**Application Number**

EP 25 15 9386

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/020705 A1 (DREAM CHIP TECH GMBH [DE]) 23 February 2023 (2023-02-23) | 1-5, 7-12,14, 15 | INV. G06T5/92 G06T5/40 |
| Y | * the whole document * | 6,13 | |
| Y | Russ John C.: "Contrast Expansion" In: "The Image processing handbook", 26 July 2002 (2002-07-26), CRC press, XP093289884, pages 132-132, * page 132; figure 1 * | 6,13 | |
| A | US 11 528 426 B2 (SK HYNIX INC [KR]) 13 December 2022 (2022-12-13) * the whole document * | 1-15 | |
| A | US 2022/327672 A1 (VO DUNG TRUNG [US] ET AL) 13 October 2022 (2022-10-13) * the whole document * | 1-15 | |

| | | | **TECHNICAL FIELDS SEARCHED (IPC)** |
|---|---|---|---|
| | | | G06T |

The present search report has been drawn up for all claims

| Place of search | Date of completion of the search | Examiner |
|---|---|---|
| Munich | 26 June 2025 | Frias Velazquez, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EP 4 625 309 A1

### ANNEX TO THE EUROPEAN SEARCH REPORT
### ON EUROPEAN PATENT APPLICATION NO.

EP 25 15 9386

This annex lists the patent family members relating to the patent documents cited in the above-mentioned European search report.
The members are as contained in the European Patent Office EDP file on
The European Patent Office is in no way liable for these particulars which are merely given for the purpose of information.

26-06-2025

| Patent document cited in search report | | Publication date | Patent family member(s) | | Publication date |
|---|---|---|---|---|---|
| WO 2023020705 | A1 | 23-02-2023 | CN | 117769720 A | 26-03-2024 |
| | | | EP | 4330907 A1 | 06-03-2024 |
| | | | JP | 2024528890 A | 01-08-2024 |
| | | | KR | 20240051935 A | 22-04-2024 |
| | | | US | 2024281941 A1 | 22-08-2024 |
| | | | WO | 2023020705 A1 | 23-02-2023 |
| US 11528426 | B2 | 13-12-2022 | CN | 113497902 A | 12-10-2021 |
| | | | KR | 20210123608 A | 14-10-2021 |
| | | | US | 2021314478 A1 | 07-10-2021 |
| US 2022327672 | A1 | 13-10-2022 | CN | 116368513 A | 30-06-2023 |
| | | | EP | 4136610 A1 | 22-02-2023 |
| | | | KR | 20230084126 A | 12-06-2023 |
| | | | US | 2022114707 A1 | 14-04-2022 |
| | | | US | 2022327672 A1 | 13-10-2022 |
| | | | WO | 2022075802 A1 | 14-04-2022 |

EPO FORM P0459

For more details about this annex : see Official Journal of the European Patent Office, No. 12/82